# EUROPEAN PATENT APPLICATION

(11) **EP 2 200 283 A1**
(43) Date of publication of application: **23.06.2010**
(21) Application number: 09252643.3
(22) Date of filing: 18.11.2009
(51) Int. Cl.: H04N 5/445, H04H 20/00, G09G 5/00

(54) **Transmitting apparatus, receiving apparatus, communication system, communication method and program**

(30) Priority: 11.12.2008 JP 2008315615
(71) Applicant: Sony Corporation, Tokyo 108-0075 (JP)
(72) Inventor: Iwami, Hideki, Tokyo (JP)
(74) Representative: Robinson, Nigel Alexander Julian

(57) **Abstract**

There is provided a transmitting apparatus, comprising, an image superimposition section that generates a superimposed image data by superimposing a user interface image generated based on a first control data used to control a user interface onto a content image, an image compression section that encodes the superimposed image data generated by the image superimposition section per an encoding unit corresponding to N lines in one field (N is equal to or greater than 1) and a communication section that transmits the superimposed image data encoded by the image compression section.

## Description

The present invention relates to a transmitting apparatus, a receiving apparatus, a communication system, a communication method, and a program.

In recent years, various applications and services to transfer image data (including moving image data) via a network have been proposed. When image data is transmitted/received via a network, generally the amount of data is reduced by coding (compression) process on the transmitting side before the data being sent out to a network and decoding (decompression) processing is performed on received encoded data on the receiving side before the data being reproduced.

For example, a compression technology called MPEG (Moving Pictures Experts Group) is available as the best-known technique of image compression processing. When MPEG compression technology is used, an MPEG stream generated by the MPEG compression technology is stored in communication packets for delivery via a network. Moreover, a technology called progressive coding that performs encoding of data to be transmitted/received hierarchically is introduced in MPEG4 or JPEG2000 on the assumption that image data is received by various receiving terminals having different performance. Further, a compression technology called a line-base codec that splits one picture into N lines (N is equal to or greater than 1) to encode an image in split sets (called a line block) is beginning to be proposed for reducing the delay time for coding and decoding the image.

Delivery of image data via a network by applying such image compression technologies is not limited to delivery to the user by operators such as content providers via the Internet and can also be used in a small-scale network such as an office or home LAN (Local Area Network).

A usage form of image data delivery using a small-scale network of home includes an example in which a display device connected to a network is caused to display image data stored in a large-scale storage device such as an HDD (Hard Disk Drive) and BD (Blu-ray Disk (registered trademark)). Such usage of a small-scale network is also expected to grow in the future with preparations of standard specifications for data exchange between digital devices by, for example, DLNA (Digital Living Network Appliance).

When image data is delivered using a small-scale network, it is also important to improve the ease-of-use of a user interface used by the user to operate a reproducing apparatus or display device. In the DLNA guideline, for example, a mechanism to search for devices connected to a network to present information of available service content obtained as a result of the search by being mutually linked is also taken into consideration.

For example, Japanese Patent Application Laid-Open No. 2007-135195 can be cited as an example of technical development for the purpose of improving the user interface related to delivery of image data. In Japanese Patent Application Laid-Open No. 2007-135195, a technique to transmit an image control signal including control data (such as an icon input by the user and position information thereof) related to the user interface to the receiving terminal when image data is delivered to wireless communication terminals is proposed.

However, when control data related to the user interface is communicated via a network in an environment in which communication line errors occur, it is difficult to maintain both reliability of transmission/reception of control data and a quick response to a user's operation at a high level. This is because, in contrast to image data with which real-time data delivery is realized by ignoring communication errors, control data is demanded to be reliably transmitted/received between devices. If, for example, control data related to the user interface is missing, it is difficult for a display device to correctly configure and display the user interface, making it difficult for the user to provide instructions of appropriate operations.

If, on the other hand, an attempt is made to maintain reliability of transmission/reception of control data, the frequency of retransmission when a communication error occurs increases, oppressing bands of a network and impairing the quick response to a user's operation. With an increase in complexity of a protocol concerning the user interface for the purpose of improving the ease-of-use for the user and an accompanying increase in capacity of control data, it is becoming more difficult to ignore an influence of such issues.

Thus, the present invention has been made in view of the above issues and it is desirable to provide a novel and improved transmitting apparatus, receiving apparatus, , a communication system, a communication method and a program whose tolerance to communication errors is enhanced when a user interface via a network is provided.

According to an embodiment of the present invention, there is provided a transmitting apparatus, including an image superimposition section that generates a superimposed image data by superimposing a user interface image generated based on a first control data used to control a user interface onto a content image, an image compression section that encodes the superimposed image data generated by the image superimposition section per an encoding unit corresponding to N lines in one field (N is equal to or greater than 1), and a communication section that transmits the superimposed image data encoded by the image compression section.

The transmitting apparatus may further include a multiplexing section that multiplexes a second control data used to control communication with the superimposed image data encoded by the image compression section, wherein the communication section may transmit the superimposed image data multiplexed with the second control data by the multiplexing section.

The communication section may further receive an operation signal transmitted from an external apparatus in connection with the user interface image displayed by another apparatus that had received the superimposed image data.

According to another embodiment of the present invention, there is provided a receiving apparatus, including a communication section that receives a superimposed image data generated by superimposing a user interface image generated based on a first control data used to control a user interface onto a content image and encoded per an encoding unit corresponding to N lines in one field (N is equal to or greater than 1), and an image decoding section that decodes the superimposed image data received by the communication section per the encoding unit.

The receiving apparatus may further include a separation section that separates a second control data used to control communication from the superimposed image data before the superimposed image data being decoded by the image decoding section.

The communication section may compare a rate of errors contained in the received superimposed image data with a certain threshold and, if the rate of errors is not greater than the threshold, cause the image decoding section to decode the superimposed image data.

If the rate of errors contained in the received superimposed image data is greater than the certain threshold, the communication section may transmit a response signal for error notification to a transmission source apparatus of the superimposed image data.

The superimposed image data may be hierarchically encoded image data containing two or more types of image data including low-frequency image data having low image quality and high-frequency image data having high image quality and if low-frequency image data of a certain frequency is received by the communication section as the superimposed image data, the image decoding section may decode the received superimposed image data regardless of whether image data of a higher frequency is received.

According to another embodiment of the present invention, there is provided a transmitting apparatus, including an image superimposition section that generates a superimposed image data by superimposing a user interface image generated based on a first control data used to control a user interface onto a content image, an image compression section that encodes the superimposed image data generated by the image superimposition section, a multiplexing section that multiplexes a second control data used to control communication with the superimposed image data encoded by the image compression section, and a communication section that transmits the superimposed image data multiplexed with the second control data by the multiplexing section.

According to another embodiment of the present invention, there is provided a receiving apparatus, including a communication section that receives a superimposed image data generated by superimposing a user interface image generated based on a first control data used to control a user interface onto a content image and multiplexed with a second control data used to control communication, a separation section that separates the second control data from the superimposed image data received by the communication section, and an image decoding section that decodes the superimposed image data from which the second control data is separated by the separation section.

According to another embodiment of the present invention, there is provided a communication system, including a transmitting apparatus having an image superimposition section that generates a superimposed image data by superimposing a user interface image generated based on a first control data used to control a user interface onto a content image, an image compression section that encodes the superimposed image data generated by the image superimposition section per an encoding unit corresponding to N lines in one field (N is equal to or greater than 1), and a transmitting-side communication section that transmits the superimposed image data encoded by the image compression section, and a receiving apparatus having a receiving-side communication section that receives the superimposed image data transmitted by the transmitting apparatus, and an image decoding section that decodes the superimposed image data received by the receiving-side communication section per the encoding unit.

According to another embodiment of the present invention, there is provided a communication method, including the steps of, generating superimposed image data by superimposing a user interface image generated based on a first control data used to control a user interface onto a content image in a transmitting apparatus, encoding the generated superimposed image data per an encoding unit corresponding to N lines in one field (N is equal to or greater than 1), transmitting the encoded superimposed image data from the transmitting apparatus to a receiving apparatus, receiving the superimposed image data transmitted by the transmitting apparatus in the receiving apparatus, and decoding the received superimposed image data per the encoding unit.

According to another embodiment of the present invention, there is provided a computer program product having instructions that cause a computer, which controls a transmitting apparatus, to function as, an image superimposition section that generates a superimposed image data by superimposing a user interface image generated based on a first control data used to control a user interface onto a content image, an image compression section that encodes the superimposed image data generated by the image superimposition section per an encoding unit corresponding to N lines in one field (N is equal to or greater than 1), and a communication section that transmits the superimposed image data encoded by the image compression section.

According to another embodiment of the present invention, there is provided a computer program product having instructions that cause a computer, which controls a receiving apparatus, to function as, a communication section that receives a superimposed image data generated by superimposing a user interface image generated based on a first control data used to control a user interface onto a content image and encoded per an encoding unit corresponding to N lines in one field (N is equal to or greater than 1), and an image decoding section that decodes the superimposed image data received by the communication section per the encoding unit.

According to a transmitting apparatus, a receiving apparatus, a communication system, a communication method and a program according to the present invention described above, the tolerance to communication errors can be enhanced when a user interface via a network is provided.

Embodiments of the invention will now be described, by way of example only, with reference to the accompanying drawings in which:
FIG. 1 is a schematic diagram showing an overview of a communication system according to an embodiment;
FIG. 2 is a block diagram exemplifying a configuration of a transmitting apparatus according to an embodiment;
FIG. 3 is a block diagram exemplifying a detailed configuration of an application section according to an embodiment;
FIG. 4 is a block diagram exemplifying the detailed configuration of a compression section according to an embodiment;
FIG. 5 is an explanatory view illustrating image superimposition processing according to an embodiment;
FIG. 6 is a flow chart exemplifying a flow of transmission processing according to an embodiment;
FIG. 7 is a block diagram exemplifying the configuration of a receiving apparatus according to an embodiment;
FIG. 8 is a block diagram exemplifying the detailed configuration of a decoding section according to an embodiment;
FIG. 9 is an explanatory view exemplifying the configuration of a communication packet;
FIG. 10 is a flow chart exemplifying the flow of reception processing according to an embodiment;
FIG. 11 is a flow chart exemplifying the concrete flow of synchronization processing according to an embodiment;
FIG. 12 is a block diagram exemplifying the configuration of the decoding section according to a variation;
FIG. 13 is a block diagram showing a configuration example of an encoder that performs wavelet conversion;
FIG. 14 is an explanatory view exemplifying frequency components obtained by bandsplitting of a two-dimensional image;
FIG. 15 is a schematic diagram conceptually showing conversion processing in line-based wavelet conversion; and
FIG. 16 is a block diagram showing a configuration example of a general-purpose computer.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted. "DETAILED DESCRIPTION OF THE EMBODIMENTS" will be described according to the order shown below:
1. Overview of Communication System According to an Embodiment
2. Description of Transmitting apparatus According to an Embodiment
3. Description of Receiving apparatus According to an Embodiment
4. Summary

### <1. Overview of Communication System According to an Embodiment>

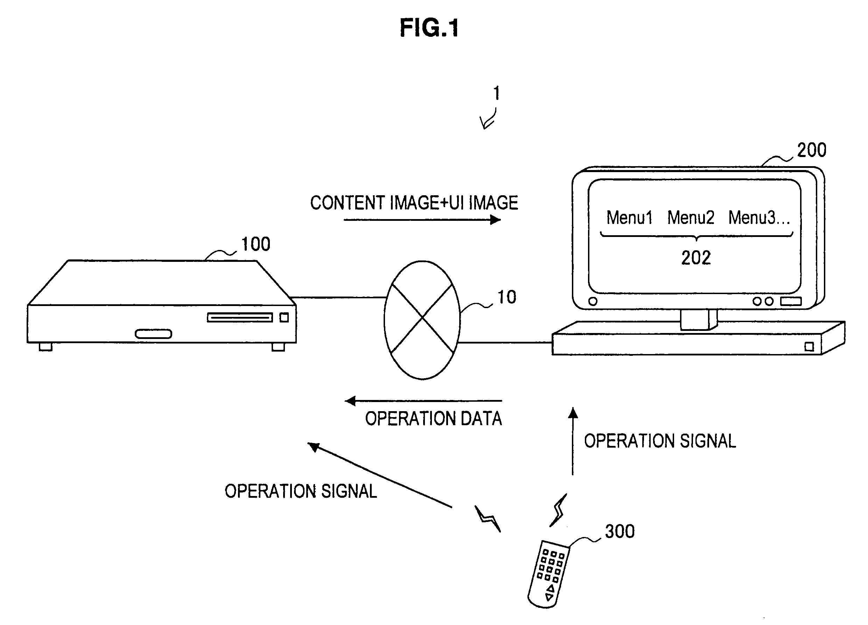

First, an overview of a communication system 1 according to an embodiment of the present invention will be described with reference to FIG. 1.

FIG. 1 is a schematic diagram showing an overview of the communication system 1 according to an embodiment of the present invention. Referring to FIG. 1, the communication system 1 includes a network 10, a transmitting apparatus 100, a receiving apparatus 200, and a remote control apparatus 300.

In FIG. 1, the network 10 is any network using a LAN, WAN, ADSL, power line, LVDS connection line, HDMI, wireless LAN (IEEE802.11), Bluetooth, WiMax, or ultra-wide band radio (UWB). The network 10 plays a role of, for example, a home network connecting the transmitting apparatus 100 and the receiving apparatus 200. The network 10 may be a wired network or a wireless network.

The transmitting apparatus 100 is typically configured as a recording/reproducing apparatus such as an HDD recorder and BD recorder storing image data such as video content. Alternatively, the transmitting apparatus 100 may be, for example, a tuner that receives and relays a program that is broadcast or an imaging apparatus that outputs image data imaged by an imaging device. For example, the transmitting apparatus 100 reads from a built-in recording medium, receives from outside, or images an image data and then, compresses the image data for transmission to the receiving apparatus 200. Note that encoding such as ChannelCodec may be included in compression herein. Moreover, the transmitting apparatus 100 provides a user interface for accepting a user's operation to users via the screen of the receiving apparatus 200.

The receiving apparatus 200 is configured as a display device using, for example, a CRT (Cathode Ray Tube), PDP (Plasma Display Panel), liquid crystal display, or OLED (Organic Light Emitting Diode). The receiving apparatus 200 receives, for example, image data transmitted from the transmitting apparatus 100 via the network 10 and displays a content image obtained by decoding the image data on the screen. The receiving apparatus 200 also displays a user interface image (for example, an image containing menus and icons) 202 on the screen to allow users to operate the transmitting apparatus 100 or the receiving apparatus 200.

The remote control apparatus 300 outputs an operation signal to operate the transmitting apparatus 100 or the receiving apparatus 200 as, for example, an infrared signal or radio signal in accordance with instructions from a user. When an operation signal is output from the remote control apparatus 300, the operation signal is detected by, for example, the receiving apparatus 200. Then, the receiving apparatus 200 transmits operation data conveying content of the operation to the transmitting apparatus 100 via the network 10. Alternatively, the operation signal output from the remote control apparatus 300 may be directly detected by the transmitting apparatus 100 positioned, for example, at a remote location.

With the configuration of the communication system 1 described above, a usage form in which, for example, users access the transmitting apparatus 100 located at a remote location using the receiving apparatus 200 installed at any location in the home to enjoy content retained by the transmitting apparatus 100 can be realized. In such a case, however, communication errors can occur in the network 10 caused by noise (a factor causing a temporary unstable state such as a multi-path, gain loss, and instantaneous interruption) generated by, for example, the ambient environment or temporary congestion of communication. For image data, data delivery maintaining real-time properties is continued according to a protocol such as UDP (User Datagram Protocol) and RTP (Real-time Transport Protocol) regardless of data losses due to communication errors. On the other hand, if control data to control the user interface should be sent to the network 10 alone, communication is delayed as a result of data retransmission due to TCP (Transmission Control Protocol) or the like, impairing the quick response to a user's operation. Thus, in an embodiment of the present invention described in detail below, necessity of transmission/retransmission of control data is eliminated by superimposing a user interface image generated based on the control data to control the user interface onto a content image in advance.

### <2. Description of Transmitting apparatus According to an Embodiment>

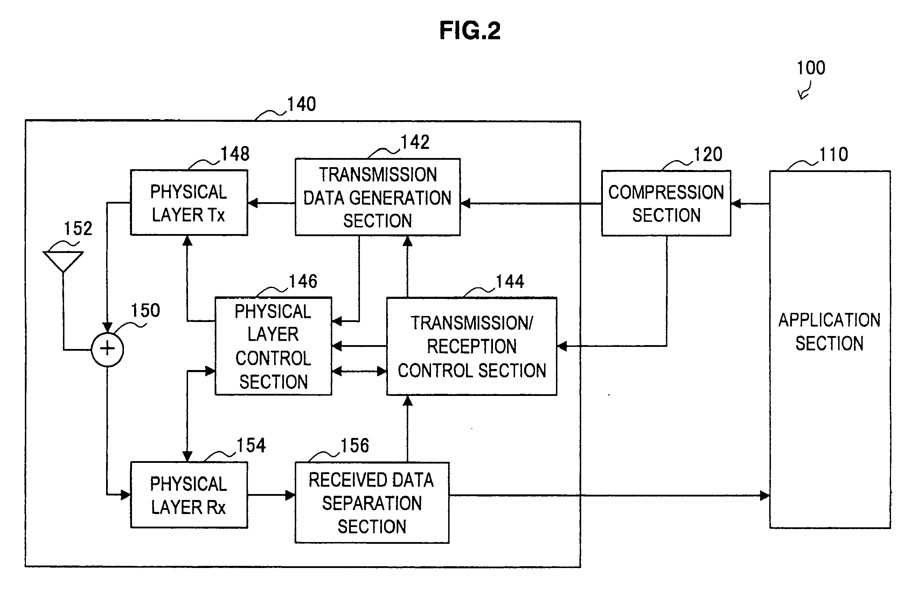

FIG. 2 is a block diagram exemplifying the configuration of the transmitting apparatus 100 according to the present embodiment. Referring to FIG. 2, the transmitting apparatus 100 includes an application section 110, a compression section 120, and a communication section 140.

### [The application section 110]

The application section 110 acquires certain image data in accordance with a user's operation and supplies the image data to the compression section 120. The application section 110 also supplies first control data used to control the user interface to cause the user to operate each application and second control data used to control communication to the compression section 120.

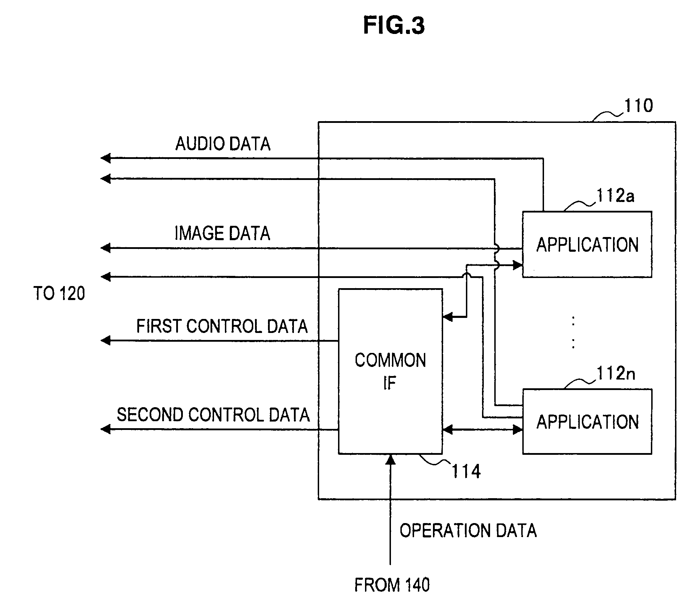

The application section 110 may be configured by, for example, as illustrated in FIG. 3, individual applications 112a to 112n and a common interface (common IF) 114.

In the example in FIG. 3, the applications 112a to 112n may be any applications such as content reproducing applications operating in the transmitting apparatus 100, broadcasting program receiving applications, or video shooting applications. The applications 112a to 112n acquires certain image data and audio data, for example, in response to a request from the user and outputs the acquired data to the compression section 120. The applications 112a to 112n also performs operations to output the aforementioned first control data and second control data and to acquire operation data via the common interface 114.

The common interface 114 is an interface that manages user interfaces provided to the user by the transmitting apparatus 100 in common. The common interface 114 may be, for example, an original user interface such as XMB (Xross Media Bar) or middleware that operates according to standardized specifications such as UI of DLNA.

For example, the common interface 114 generates first control data used to control the user interface and outputs the first control data to the compression section 120. The first control data may contain any control data related to the display of the user interface such as a list of menus selectable by the user, identifiers of icons corresponding to each menu, and positions where icons should be displayed on the screen. The common interface 114 also outputs second control data used to control communication at an application level to the compression section 120.

Further, for example, when operation data output from the remote control apparatus 300 shown in FIG. 1 or relayed by the receiving apparatus 200 is input, the common interface 114 provides instructions of an operation in accordance with the operation data to one of the applications 112a to 112n. When an error related to superimposed image data is notified, as described later, the common interface 114 may output the aforementioned first control data to the compression section 120 again.

### [The compression section 120]

Returning to FIG. 2, the description of the configuration of the transmitting apparatus 100 according to the present embodiment will continue.

When image data and first control data are supplied from the application section 110, the compression section 120 generates a superimposed image data by superimposing a user interface image onto a content image and encodes the superimposed image data. The compression section 120 also multiplexes a second control data or encoded audio data supplied from the application section 110 with the superimposed image data. A content image in the present embodiment may be any image represented by image data supplied from the application section 110.

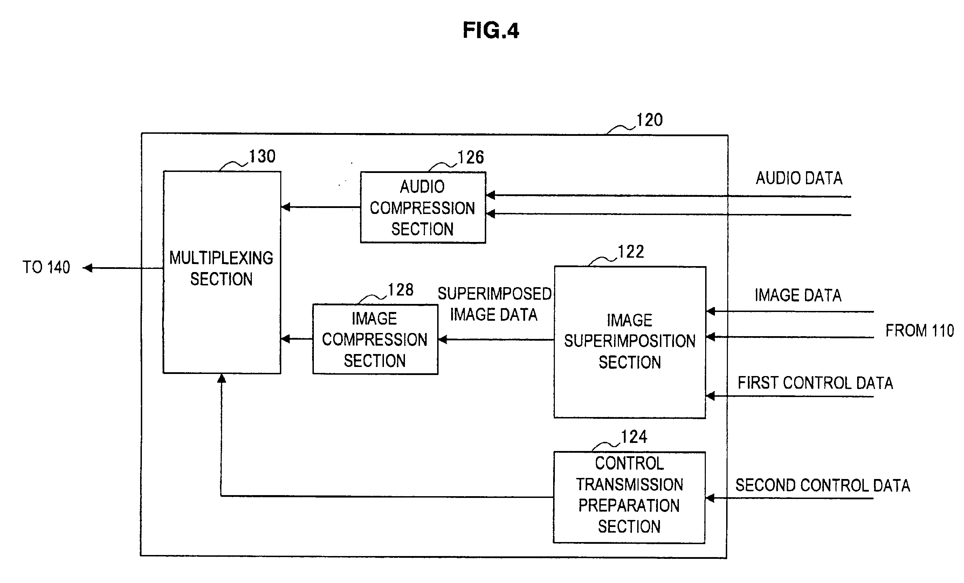

FIG. 4 is a block diagram exemplifying the detailed configuration of the compression section 120.

In the example in FIG. 4, the compression section 120 includes an image superimposition section 122, a control transmission preparation section 124, an audio compression section 126, an image compression section 128, and a multiplexing section 130.

The image superimposition section 122 superimposes a user interface image generated based on the first control data used to control the user interface onto a content image to generate superimposed image data.

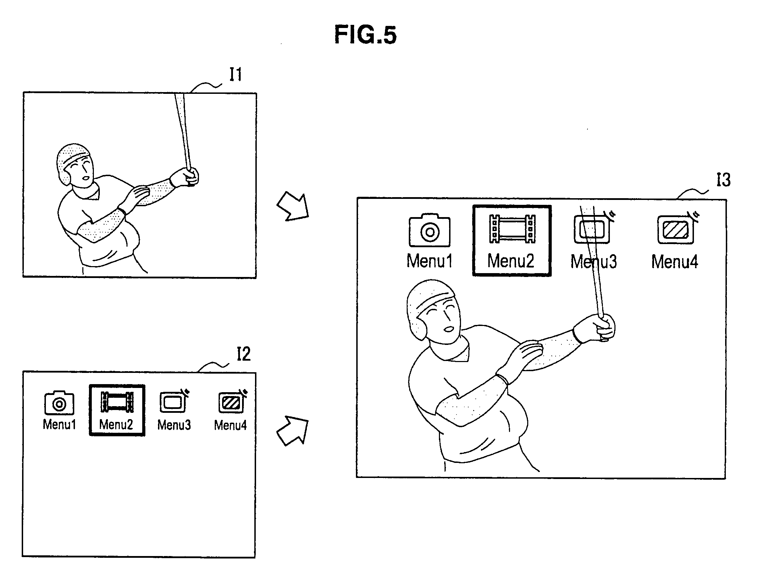

FIG. 5 is an explanatory view illustrating image superimposition processing by the image superimposition section 122. In FIG. 5, three images of an image 11, an image I2, and an image I3 are shown. Of these images, the image I1 is a content image displaying content of image data supplied from the application section 110. The image I2, on the other hand, is a user interface image generated based on data such as a list of menus contained in the first control data supplied from the application section 110. In the example in FIG. 5, the image I2 has four menu strings of "Menu1" through "Menu4" and a group of corresponding icons displayed therein. The image superimposition section 122 superimposes the user interface image I2 onto the content image 11 to generate the superimposed image data 13.

In the example in FIG. 5, the image superimposition section 122 superimposes the user interface image I2 onto the content image I1 with making the user interface image I2 transparent. But superimposition of images by the image superimposition section 122 is not limited to such an example. For example, the image superimposition section 122 may superimpose the user interface image I2 onto the content image I1 without making the user interface image I2 transparent. Alternatively, the image superimposition section 122 may arrange the content image 11 and the user interface image I2 side by side in any direction without superimposition. Further, the image superimposition section 122 may display only the user interface image I2 as the superimposed image data. Herein, superimposition of images means insertion of a user interface image into a transmission data stream in any form.

Returning to FIG. 4, the control transmission preparation section 124 temporarily holds the second control data supplied from the application section 110 and then outputs the second control data to the multiplexing section 130 described later.

The audio compression section 126 compresses audio data supplied from the application section 110 according to any audio encoding method such as PCM, ADPCM, MP3, WMA, AAC, ATRAC3plus, and ATRAC3. Image data transmitted from the transmitting apparatus 100 in the communication system 1 need not necessarily be accompanied by audio data. That is, the audio compression section 126 may be omitted in the configuration of the transmitting apparatus 100.

The image compression section 128 encodes the aforementioned superimposed image data generated by the image superimposition section 122 per a coding unit corresponding to N lines in one field (N is equal to or greater than 1). That is, if N is equal to or greater than 1, the image compression section 128 compresses the aforementioned superimposed image data generated by the image superimposition section 122 according to the line-based codec.

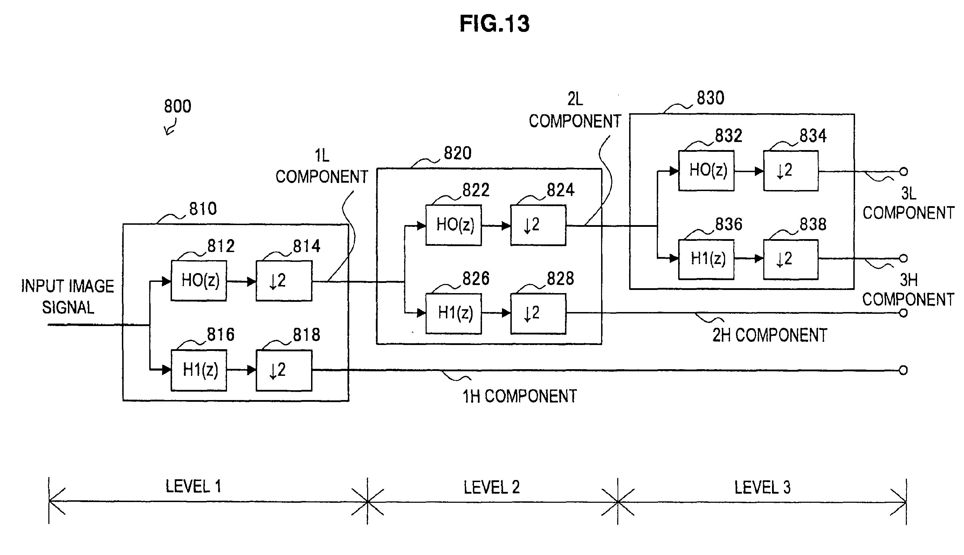

A mechanism of line-based wavelet conversion will be described below as an example of the line-based codec using FIG. 13 to FIG. 15.

Line-based wavelet conversion is a codec technology that performs wavelet conversion in the horizontal direction each time that one line of a baseband signal of an original image is scanned and performs wavelet conversion in the vertical direction each time a certain number of lines are read.

FIG. 13 is a block diagram showing a configuration example of an encoder 800 that performs wavelet conversion. The encoder 800 shown in FIG. 13 performs octave splitting, which is the most common wavelet conversion, in three layers (three levels) to generate hierarchically encoded image data.

Referring to FIG. 13, the encoder 800 includes a circuit section 810 at Level 1, a circuit section 820 at Level 2, and a circuit section 830 at Level 3. The circuit section 810 at Level 1 has a low-pass filter 812, a down sampler 814, a high-pass filter 816, and a down sampler 818. The circuit section 820 at Level 2 has a low-pass filter 822, a down sampler 824, a high-pass filter 826, and a down sampler 828. The circuit section 830 at Level 3 has a low-pass filter 832, a down sampler 834, a high-pass filter 836, and a down sampler 838.

An input image signal is split into bands by the low-pass filter 812 (transfer function H0 (z)) and the high-pass filter 816 (transfer function H1 (z)) of the circuit section 810. Low-frequency components (1L components) and high-frequency components (1H components) obtained by bandsplitting are thinned out to half in resolution by the down sampler 814 and the down sampler 818 respectively.

A signal of the low-frequency components (1L components) thinned out by the down sampler 814 is further split into bands by the low-pass filter 822 (transfer function H0 (z)) and the high-pass filter 826 (transfer function H1 (z)) of the circuit section 820. Low-frequency components (2L components) and high-frequency components (2H components) obtained by bandsplitting are thinned out to half in resolution by the down sampler 824 and the down sampler 828 respectively.

Further, a signal of the low-frequency components (2L components) thinned out by the down sampler 824 is further split into bands by the low-pass filter 832 (transfer function H0 (z)) and the high-pass filter 836 (transfer function H1 (z)) of the circuit section 820. Low-frequency components (3L components) and high-frequency components (3H components) obtained by bandsplitting are thinned out to half in resolution by the down sampler 834 and the down sampler 838 respectively.

In this manner, frequency components are sequentially generated by hierarchically splitting low-frequency components into bands up to a certain level. In the example in FIG. 13, as a result of bandsplitting up to Level 3, high-frequency components (1H components) thinned out by the down sampler 818, high-frequency components (2H components) thinned out by the down sampler 828, high-frequency components (3H components) thinned out by the down sampler 838, and low-frequency components (3L components) thinned out by the down sampler 834 are generated.

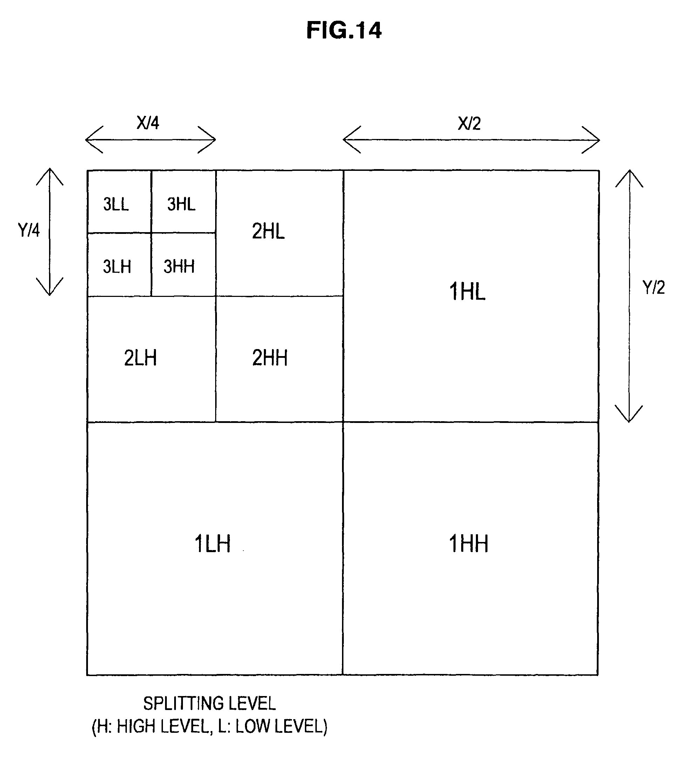

FIG. 14 is a diagram showing frequency components obtained by bandsplitting of a two-dimensional image up to Level 3. In the example in FIG. 14, each sub-image of four components 1LL, 1LH, 1HL, and 1HH by bandsplitting (horizontal/vertical direction) at Level 1. Here, LL indicates that both horizontal and vertical components are L, and LH indicates that the horizontal component is H and the vertical component is L. Next, the 1LL component is again split into bands to acquire each sub-image of 2LL, 2HL, 2LH, and 2HH. Further, the 2LL component is again split into bands to acquire each sub-image of 3LL, 3HL, 3LH, and 3HH.

As a result of repeatedly performing wavelet conversion in this manner, output signals form a hierarchical structure containing sub-images. Line-based wavelet conversion is obtained by further extending such wavelet conversion based on lines.

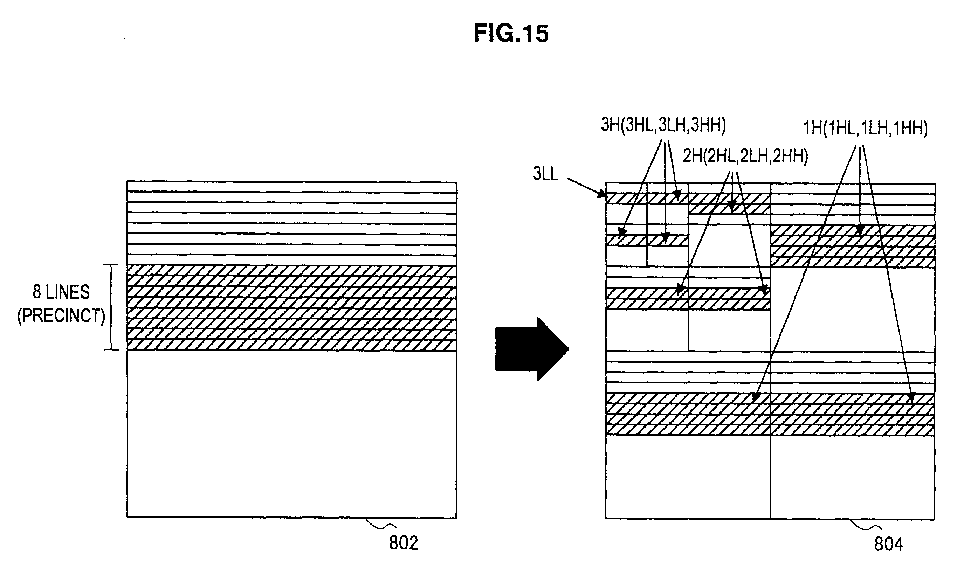

FIG. 15 is a schematic diagram conceptually showing conversion processing by line-based wavelet conversion. Here, as an example, wavelet conversion is performed in the vertical direction for each eight lines of baseband.

If, in this case, wavelet conversion is to be performed in three layers, with respect to the eight lines, one line of encoded data is generated for the lowest-level band 3LL sub-image and one line for each of sub-bands 3H (sub-images 3HL, 3LH, and 3HH) at the next level. Further, two lines are generated for each of sub-bands 2H (sub-images 2HL, 2LH, and 2HH) at the next level and further, four lines for each of the highest-level bands 1H (sub-images 1HL, 1LH, and 1HH).

A set of lines of each sub-band will be called a precinct. That is, the precinct is a set of lines to be the coding unit of line-based wavelet conversion as a form of a line block, which is a set of lines. Herein, the encoding unit generally means a set of lines to be the unit of encoding processing. That is, the encoding unit is not limited to a precinct in line-based wavelet conversion and may be the unit of encoding processing in existing hierarchical encoding such as JPEG2000 and MPEG4.

Referring to FIG. 15, the precinct (shadow area in FIG. 15) consisting of eight lines in a baseband signal 802 shown on the left side in FIG. 15 is constituted, as shown on the right side in FIG. 15, as four lines (shadow area in FIG. 15) of each of 1HL, 1LH, and 1HH in 1H, two lines (shadow area in FIG. 15) of each of 2HL, 2LH, and 2HH in 2H, and one line (shadow area in FIG. 15) of each of 3LL, 3HL, 3LH, and 3HH in a line-based wavelet converted signal 804 after conversion.

According to such line-based wavelet conversion processing, processing can be performed by decomposing a picture into finer grain sizes, like tile decomposing in JPEG2000, so that a delay when image data is transmitted and received can be made shorter. Further, in contrast to tile decomposing in JPEG2000, line-based wavelet conversion carries out a division using a wavelet coefficient instead of a division per a base-band signal and thus has a feature that no image quality deterioration like block noise occurs in tile boundaries.

Line-based wavelet conversion has been described above as an example of the line-based codec. Compression processing by the image compression section 128 shown in FIG. 4 is not limited to line-based wavelet conversion. The image compression section 128 is applicable to any line-based codec such as the existing hierarchical coding, for example, JPEG2000 and MPEG4.

Returning to FIG. 4, the multiplexing section 130 multiplexes superimposed image data encoded by the image compression section 128 with second control data output from the control transmission preparation section 124 and encoded audio data output from the audio compression section 126. Then, the multiplexing section 130 outputs the multiplexed superimposed image data to the communication section 140.

Returning further to FIG. 2, the description of the configuration of the transmitting apparatus 100 according to the present embodiment will continue.

### [The communication section 140]

The communication section 140 includes a transmission data generation section 142, a transmission/reception control section 144, a physical layer control section 146, a physical layer Tx 148, a switch section 150, an antenna section 152, a physical layer Rx 154, and a received data separation section 156.

The transmission data generation section 142 generates a communication packet containing superimposed image data output from the compression section 120. When communication based on, for example, the TCP, UDP, or IP protocol is performed, the transmission data generation section 142 generates an IP packet by adding a TCP or UDP header and terminal identification information (for example, a MAC address of Ethernet (registered trademark) or an IP address) to the superimposed image data.

The transmission/reception control section 144 controls the MAC (Media Access Control) layer in the TDMA (Time Division Multiple Access) method, CSMA (Carrier Sense Multiple Access), or FDMA (Frequency Division Multiple Access) method. The transmission/reception control section 144 may also execute control of the MAC layer based on PSMA (Preamble Sense Multiple Access) that identifies packets from a correlation of not the carrier, but the preamble.

The physical layer control section 146 controls the physical layer based on instructions from the transmission/reception control section 144 or the transmission data generation section 142. The physical layer Tx 148 starts an operation based on a request from the physical layer control section 146 and outputs communication packets supplied from the transmission data generation section 142 to the switch section 150.

The switch section 150 has a function to switch transmission and reception of data. For example, when communication packets are supplied from the physical layer Tx 148, the switch section 150 transmits the communication packets via the antenna section 152. When communication packets are received via the antenna section 152, the switch section 150 supplies the received packets to the physical layer Rx 154.

The physical layer Rx 154 starts an operation based on a request from the physical layer control section 146 and supplies received packets to the received data separation section 156.

The received data separation section 156 analyzes received packets supplied from the physical layer Rx 154 and demultiplxes data to be delivered to the application section 110 before outputting the data to the application section 110. For example, the received data separation section 156 may reference the port number of the TCP or UDP header contained in a received packet to identify data to be delivered to the application section 110.

In the communication system 1, two kinds of data that may be received by the transmitting apparatus 100 are present. Of the two kinds of data, first data is operation data output by the remote control apparatus 300 after instructions of a user who viewed a user interface image displayed by the receiving apparatus 200 being received. Second data is error-related statistical data returned by the receiving apparatus 200 when an error concerning the superimposed image data is detected.

Operation data is contained in an operation signal output from the remote control apparatus 300. The communication section 140 of the transmitting apparatus 100 receives the operation signal from the remote control apparatus 300 directly or via the receiving apparatus 200. Then, operation data separated by the communication section 140 from the operation signal is input into the application section 110. If the operation signal is output from the remote control apparatus 300 as, for example, an infrared signal, an infrared interface (not shown) provided outside of the communication section 140 shown in FIG. 2 may receive the operation signal to output the operation data to the application section 110.

Error-related statistical data, on the other hand, is contained in a response signal transmitted from the receiving apparatus 200. When a response signal is received from the receiving apparatus 200, the communication section 140 of the transmitting apparatus 100 separates error-related statistical data from the response signal to input the response signal into the application section 110. Accordingly, for example, the application section 110 may output the first control data to control the user interface again to the compression section 120.

### [Example of the processing flow]

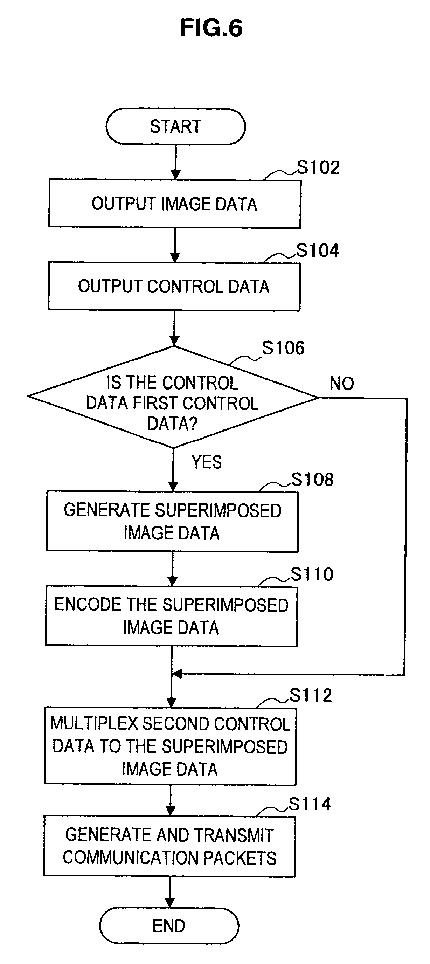

Next, FIG. 6 is a flow chart exemplifying the flow of transmission processing of superimposed image data by the transmitting apparatus 100 described using FIG. 2 to FIG. 5.

Referring to FIG. 6, image data of a content image the receiving apparatus 200 will be caused to display is first output to the compression section 120 by the application section 110 (S102). At this point, audio data is also output to the compression section 120 if necessary.

Next, first control data or second control data is output to the compression section 120 by the application section 110 (S104).

Then, the compression section 120 determines whether control data output from the application section 110 is the first control data or second control data (S106). If the control data is the first control data, processing proceeds to S108. If, on the other hand, the control data is not the first control data, processing proceeds to S 112.

At S108, superimposed image data in which a user interface image is superimposed onto a content image is generated by the image superimposition section 122 of the compression section 120 using the image data and first control data input from the application section 110 (S108).

Next, the superimposed image data is encoded by the image compression section 128 per a coding unit corresponding to N lines in one field (N is equal to or greater than 1).

Next, the second control data input from the application section 110 is multiplexed with the superimposed image data compressed by the image compression section 128 (S112). At this point, audio data compressed by the audio compression section 126 is also multiplexed if necessary.

Then, communication packets containing the superimposed image data after being multiplexed are generated by the communication section 140 and then transmitted to the receiving apparatus 200 via the network 10 (S 114).

The transmitting apparatus 100 according to the present embodiment has been described using FIG. 2 to FIG. 6. Next, the configuration of the receiving apparatus 200 that receives a superimposed image data transmitted from the transmitting apparatus 100 will be described.

### <3. Description of Receiving apparatus According to an Embodiment>

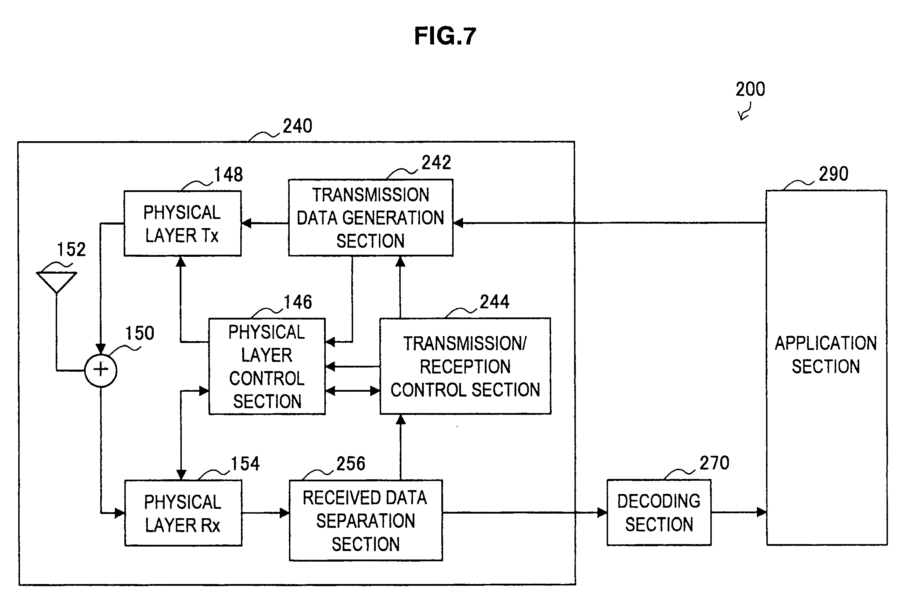

FIG. 7 is a block diagram exemplifying the configuration of the receiving apparatus 200 according to the present embodiment. Referring to FIG. 7, the receiving apparatus 200 includes a communication section 240, a decoding section 270, and an application section 290.

### [The communication section 240]

The communication section 240 includes a transmission data generation section 242, a transmission/reception control section 244, the physical layer control section 146, the physical layer Tx 148, the switch section 150, the antenna section 152, the physical layer Rx 154, and a received data separation section 256.

The transmission data generation section 242 reads data to be transmitted to the transmitting apparatus 100 based on a request of the transmission/reception control section 244 to generate transmission packets. For example, the transmission data generation section 242 generates IP packets and then outputs the IP packets to the physical layer Tx 148.

Like the transmission/reception control section 144 of the transmitting apparatus 100, the transmission/reception control section 244 controls the MAC layer. The transmission/reception control section 244 also compares the error rate of the superimposed image data detected by, for example, a received data separation section 256 described later with a certain threshold and, if the error rate is higher, causes the communication section 240 to transmit a response signal containing error-related statistical data in order to notify an occurrence of errors to the transmitting apparatus 100. Detection of errors contained in the superimposed image data will further be described later.

The received data separation section 256 analyzes received packets supplied from the physical layer Rx 154 and demultiplxes data to be delivered to the decoding section 270 before outputting the data to the decoding section 270. For example, when communication based on the IP protocol is performed, the received data separation section 256 references the destination IP address and destination port number contained in a received packet so that data to be delivered to the decoding section 270 can be identified.

### [The decoding section 270]

The decoding section 270 decodes, for example, the superimposed image data output from the received data separation section 256 per a unit of N lines in one field (N is equal to or greater than 1) and then, outputs the superimposed image data after being decoded to the application section 290.

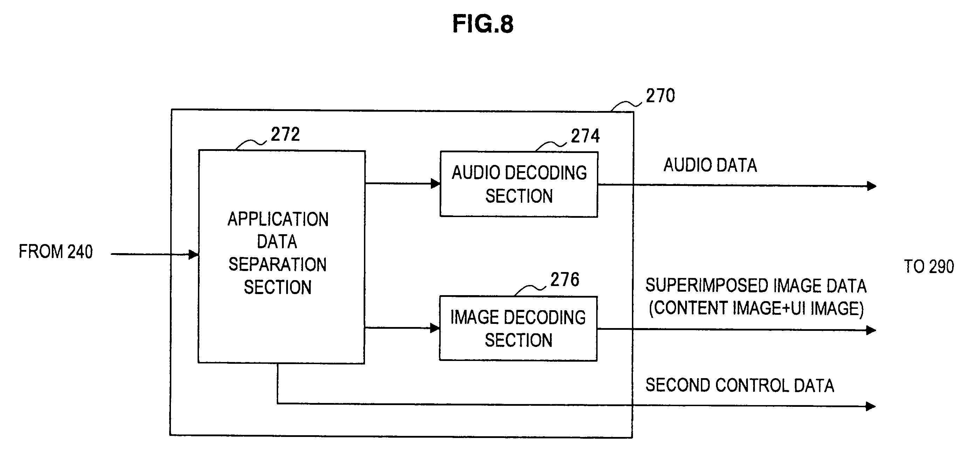

FIG. 8 is a block diagram exemplifying the detailed configuration of the decoding section 270. Referring to FIG. 8, the decoding section 270 includes an application data separation section 272, an audio decoding section 274, and an image decoding section 276.

The application data separation section 272 determines the type of media by referencing the application header of data input from the received data separation section 256 and then distributes data. If, for example, input data is encoded audio data, the application data separation section 272 outputs the audio data to the audio decoding section 274. If input data is encoded superimposed image data, the application data separation section 272 outputs the superimposed image data to the image decoding section 276. If input data is second control data, the application data separation section 272 outputs the second control data to the application section 290.

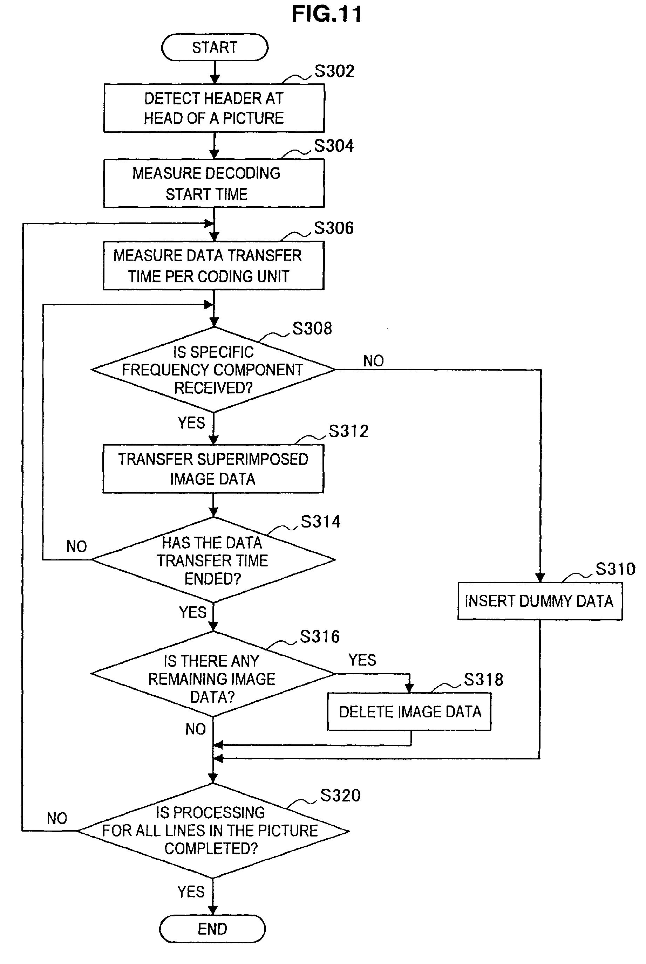

When compared with a picture-based codec, the time available for control of reception and decoding of image data in the line-based codec is shorter. Thus, in order to decode a superimposed image data in a synchronization state with stability, the application data separation section 272 temporarily stores the superimposed image data input from the received data separation section 256 and outputs the superimposed image data by determining the certain synchronization timing. Such synchronization processing by the application data separation section 272 will further be described later using FIG. 11.

The audio decoding section 274 decodes audio data input from the application data separation section 272 according to any audio encoding method such as PCM, ADPCM, MP3, WMA, AAC, ATRAC3plus, and ATRAC3. The audio data decoded by the audio decoding section 274 is output to the application section 290. Like the audio compression section 126 of the transmitting apparatus 100, the audio decoding section 274 may be omitted in the receiving apparatus 200.

The image decoding section 276 decodes the superimposed image data input from the application data separation section 272 per a coding unit corresponding to N lines in one field. The superimposed image data decoded by the image decoding section 276 is output to the application section 290.

### [The application section 290]

Returning to FIG. 7, the description of the configuration of the application section 290 will continue.

The application section 290 reproduces the decoded superimposed image data supplied from the decoding section 270. Accordingly, a user interface image superimposed onto a content image contained in the superimposed image data is displayed on the screen of the receiving apparatus 200. The application section 290 reproduces the decoded audio data supplied from the decoding section 270 using an audio output apparatus such as a speaker. ]

To be noted in the configuration of the receiving apparatus 200 is that there is no need to further separate the superimposed image data decoded by the image decoding section 276 of the decoding section 270 into image data of a content image and first control data for a user interface image. If communication errors should occur, such errors may be contained in a portion of the superimposed image data. Even in that case, however, if the error rate does not exceed a certain amount, the user interface image in an image displayed by the receiving apparatus 200 can be recognized by the user because the user interface image is superimposed onto the content image. As a result, the user interface can readily be provided to the user according to a protocol that attaches importance to real-time properties such as UDP and RTP.

### [Error detection]

Detection of errors in superimposed image data in the receiving apparatus 200 can be achieved by, for example, the physical layer Rx 154 or the received data separation section 256 shown in FIG. 7. In the physical layer Rx 154, for example, errors of bits or symbols contained in received packets can be detected using a well-known technique such as the cyclic redundancy check, Reed-Solomon code, Gold code, or Viterbi algorithm. In the received data separation section 256, for example, packet losses can be detected from missing sequence numbers within the RTP header. Communication errors may also be detected by phase shifts or fluctuations in signal intensity in radio communication.

The transmission/reception control section 244 is notified of errors of superimposed image data detected in this manner to calculate the error rate. Then, the transmission/reception control section 244 compares, for example, a predefined certain threshold and the calculated error rate. If the error rate is greater than the predefined threshold, that is, if it is difficult for the user to correctly recognize a user interface image even if the superimposed image data is decoded and displayed, the transmission/reception control section 244 transmits a response signal for error notification to the transmitting apparatus 100. If the error rate is not greater than the threshold, that is, if it is determined that the user can recognize a user interface image, the transmission/reception control section 244 allows decoding processing of the superimposed image data to continue.

An example in which a threshold determination of the error rate is made by the transmission/reception control section 244 is described here. Alternatively, the threshold determination may also be made by the decoding section 270 or the application section 290.

### [Configuration example of a communication packet]

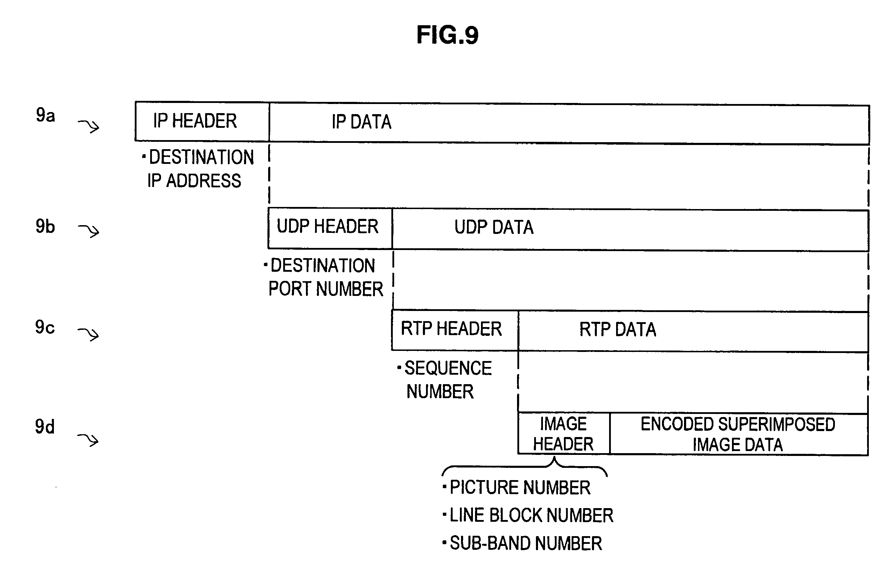

FIG. 9 shows the configuration of a UDP/IP packet as an example of communication packets that may be received by the receiving apparatus 200 in the present embodiment.

In FIG. 9, the internal configuration of one IP packet is shown in four stages of (A) to (D). Referring to 9a, an IP packet is constituted by an IP header and IP data. The IP header contains, for example, control information on control of communication paths based on the IP protocol such as a destination IP address.

Next, referring to 9b, the IP data is further constituted by a UDP header and UDP data. The UDP header contains, for example, the destination port number, which is application identification information.

Next, referring to 9c, the UDP data is further constituted by an RTP header and RTP data. The RTP header contains control information such as the sequence number to guarantee orderliness of, for example, a data stream.

Next, referring to 9d, the RTP data is constituted by a header (image header) of image data and superimposed image data encoded based on the line-based codec. The image header contains, for example, the picture number, line block number (or line number when encoded per unit of one line), or sub-band number. The image header may further be constituted by a picture header attached to each picture and a line block header attached to each line block.

### [Processing flow example]

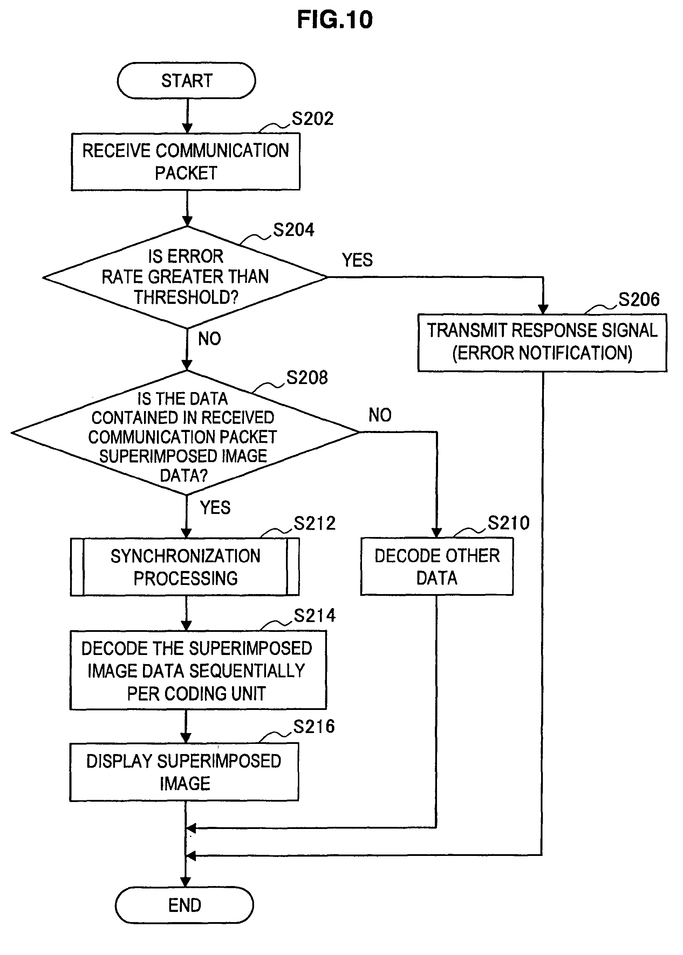

Next, FIG. 10 is a flow chart exemplifying the flow of reception processing of superimposed image data by the receiving apparatus 200 described using FIG. 7 to FIG. 9.

Referring to FIG. 10, communication packets transmitted from the transmitting apparatus 100 are first received by the communication section 240 (S202).

Next, whether the rate of errors that occurred on a communication path is greater than a certain threshold is determined by, for example, the transmission/reception control section 244 of the communication section 240 (S204). If the rate of errors is greater than the certain threshold, processing proceeds to S206.

At S206, a response signal for notification of an occurrence of error is transmitted from the receiving apparatus 200 to the transmitting apparatus 100 (S206). Accordingly, the transmitting apparatus 100 can recognize that the service provision is hindered due to a deteriorating communication environment.

If, on the other hand, the rate of errors that occurred on a communication path is smaller than the certain threshold at S204, processing proceeds to S208. At S208, whether data contained in received communication packets is superimposed image data is determined (S208). If data contained in received communication packets is not superimposed image data, processing proceeds to S210.

At S210, data other than superimposed image data, for example, audio data is decoded by the audio decoding section 274 of the decoding section 270 (S210). The audio data decoded by the audio decoding section 274 is output to the application section 290. At this step, for example, second control data is output from the application data separation section 272 of the decoding section 270 to the application section 290.

If, on the other hand, data contained in received communication packets is superimposed image data, synchronization processing of a decoding start point of the superimposed image data is performed by the application data separation section 272 (S212).

FIG. 11 is a flow chart exemplifying the concrete flow of synchronization processing by the application data separation section 272.

Referring to FIG. 11, a header (for example, an image header shown in FIG. 9) of superimposed image data input into the application data separation section 272 is first detected so that the head of a picture is recognized from the line block number or the like (S302).

Next, after recognizing the head of pictures, the application data separation section 272 activates a timer to measure the time and waits for the arrival of the decoding start point (S304). The wait time up to the decoding start point here is preset, for example, as a time capable of absorbing fluctuations of data amounts per a coding unit or delays due to jitters or the like on a communication path. However, the wait time up to the decoding start point is preferably as short as possible to enhance responsiveness of the user interface.

Then, when the decoding start point comes, the application data separation section 272 starts measurement of the data transfer time per the coding unit (S306). Here, the data transfer time per the coding unit means a time that can be expended to display superimposed image data of one encoding unit. As an example, when video of 1080/60p (the progressive method of 60fps with the screen size 2200 x 1125) is decoded, the time that can be expended for the display of one line becomes about 14.8 [µs] if a blank time is added and about 15.4 [µs] if no blank time is added. If the encoding unit is a line block of N lines, the data transfer time per the coding unit will be N times the aforementioned time that can be expended for the display of one line.

Further, the application data separation section 272 determines whether reception of superimposed image data of a specific frequency component is finished at that time (S308). The specific frequency component at this step is preset, for example, as a frequency component having the minimum image quality to be displayed for the user. The specific frequency component may be the lowest-frequency component contained in the superimposed image data or some frequency component set in accordance with the type of image. If reception of the superimposed image data of a specific frequency component is not completed, processing proceeds to S310. If, on the other hand, reception of the superimposed image data of a specific frequency component is completed, processing proceeds to S312.

If processing proceeds to S310, superimposed image data of a frequency component (specific frequency component) to be displayed at the very least may not have been received due to a data delay or data error. In that case, dummy data is inserted into a line (or a line block) for which data has failed to be received because if reception of the data is awaited, synchronization timing is shifted, leading to a delay of image display (S310). For example, frequency components received here may be used as they are with dummy data inserted only for frequency components whose reception failed. Dummy data to be inserted here may be, for example, superimposed image data of the same line (or the same line block) of the previous picture (or a picture prior to the previous picture), fixed image data, or predicted data based on motion compensation.

At S312, on the other hand, superimposed image data containing a specific frequency component is transferred from the application data separation section 272 to the image decoding section 276 (S312). The transfer of superimposed image data continues until the data transfer time per the coding unit ends (S314). Then, when the data transfer time per the coding unit ends, processing proceeds to S316.

At S316, whether there remains superimposed image data to be decoded whose transfer is not completed at that time is determined (S316). If there remains superimposed image data to be decoded whose transfer is not completed, the superimposed image data is deleted (S318).

Then, it is determined whether processing of all lines in a picture is completed (S320). If there remains any line whose processing is not completed, processing returns to S306 to repeat measurement of the data transfer time per the coding unit and the transfer of superimposed image data to the image decoding section 276. If, on the other hand, processing of all lines is completed, synchronization processing to decode superimposed image data for one picture is completed.

Returning to FIG. 10, the description of the flow of reception processing of superimposed image data will continue.

The superimposed image data transferred to the image decoding section 276 as a result of synchronization processing by the application data separation section 272 is sequentially decoded per the coding unit by the image decoding section 276 (S214). The decoded superimposed image data is output from the image decoding section 276 to the application section 290. If the header indicating the head of the next picture is detected after processing up to S320 being completed once, the first synchronization timing may be used without measuring the decoding start time.

Then, the application section 290 displays the decoded superimposed image data on the screen of the receiving apparatus 200 (S216). As a result, the user can view the user interface image to operate the transmitting apparatus 100 or the receiving apparatus 200 on the screen.

Reception processing of superimposed image data performed by the receiving apparatus 200 according to the present embodiment has been described using FIG. 10 and FIG. 11. As is understood from the above description, the user can be caused to visually recognize the user interface image even if communication errors to the extent that a certain threshold is not exceeded are contained in the superimposed image data displayed in the display device of the receiving apparatus 200. Also in the present embodiment, if transmission/reception of superimposed image data of a preset specific frequency component of multi-stage frequency components is successful, the user interface image having image quality corresponding to at least the specific frequency component is displayed even if other frequency components are lost.

### [Description of variations]

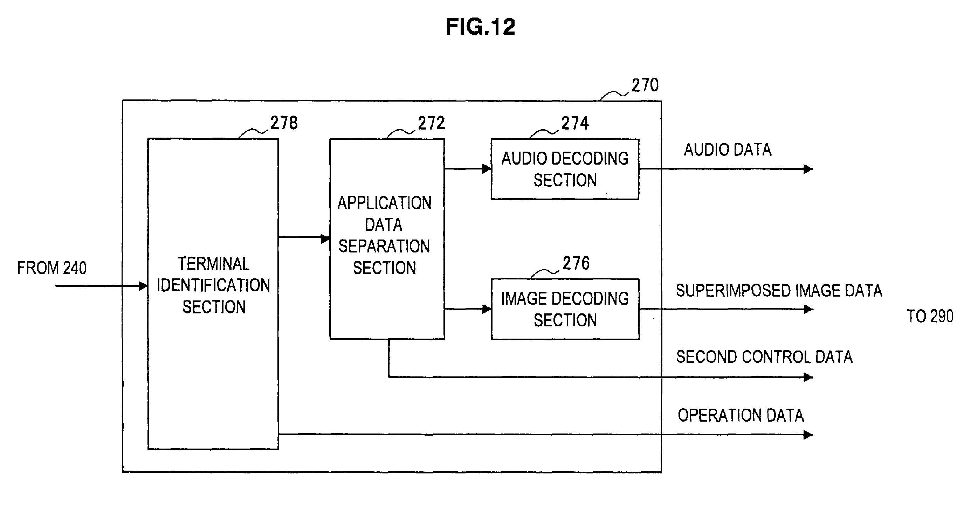

As a variation of the present embodiment, the decoding section 270 of the receiving apparatus 200 may be configured as shown in FIG. 12. Referring to FIG. 12, the decoding section 270 of the receiving apparatus 200 includes a terminal identification section 278, in addition to the application data separation section 272, the audio decoding section 274, and the image decoding section 276 shown in FIG. 8.

The terminal identification section 278 identifies the terminal of the transmission source of application data input from the communication section 240 by referring to, for example, the IP header of a packet and distributes data in accordance with an identification result. If, for example, data is received from the remote control apparatus 300, the terminal identification section 278 outputs the data to the application section 290 as operation data acquired from an operation signal. If data containing superimposed image data is received from the transmitting apparatus 100, the terminal identification section 278 outputs the data to the application data separation section 272.

According to the above variation, when an operation signal is received from the remote control apparatus 300, the receiving apparatus 200 can acquire operation data from the received operation signal to relay the operation data to the transmitting apparatus 100. That is, even if the transmitting apparatus 100 and the receiving apparatus 200 are installed apart from each other so that it is difficult to transmit an operation signal from the remote control apparatus 300 directly to the transmitting apparatus 100, the user can operate the transmitting apparatus 100 while viewing the user interface image displayed in the receiving apparatus 200.

As another variation, the decoding section 270 or the application section 290 of the receiving apparatus 200 may identify the position of a line block whose reception failed due to a communication error on the screen to determine whether to decode or display the image in accordance with the position thereof. The position of a line block on the screen can be identified from the line block number shown in FIG. 9 or the like.

### <4. Summary>

The communication system 1 according to an example embodiment of the present invention has been described using FIG. 1 to FIG. 13. According to the present embodiment, as described above, the user can visually recognize a user interface image even if a superimposed image data displayed on the screen of the receiving apparatus 200 contains some communication errors to the extent that a certain threshold is not exceeded. Moreover, if transmission/reception of superimposed image data of a preset specific frequency component of multi-stage frequency components is successful, a user interface image having image quality corresponding to at least the specific frequency component is displayed. As a result, error tolerance is enhanced in the case that a user interface is provided from the transmitting apparatus 100 to the receiving apparatus 200 via the network 10. Additionally, a responsibility for a user's operation is improved.

Also, according to the present embodiment, since first control data to control a user interface is not sent out to a network, an increase in capacity of control data due to increasing complexities of user interface specifications and decrease in communication efficiency due to increasing complexities of protocol can be avoided.

Further, by using the line-based codec, the amount of information in one unit handled in encoding and decoding of images and transmission/reception thereof is reduced, bringing advantages such as high-speed processing and reduction in hardware scale.

In another embodiment, superimposed image data may be encoded by a picture-based codec. Also in such a case, a user interface image is transmitted/received after being superimposed onto a content image and thus, the first control data to control the user interface is not sent out to a network. Accordingly, the user can be caused to visually recognize the user interface image even if communication errors occur in a portion of data.

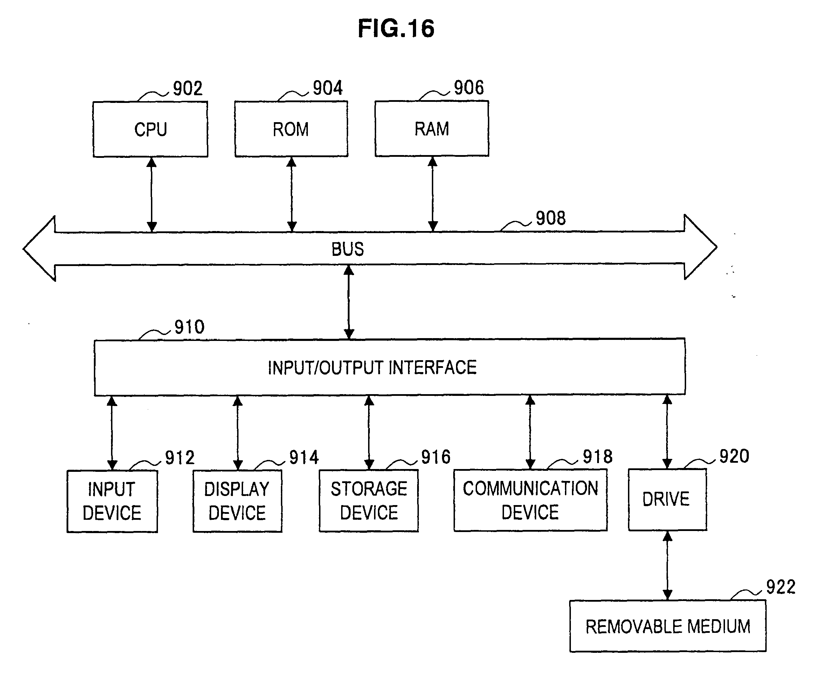

A sequence of processing described herein may be realized by hardware or software. When software is caused to perform a sequence of processing or a portion thereof, a computer in which programs constituting the software are incorporated into dedicated hardware or a general-purpose computer shown in FIG. 16 is used for execution thereof.

In FIG. 16, a CPU (Central Processing Unit) 902 controls overall operations of a general-purpose computer. Data or a program which describes a portion of or all of a sequence of processing is stored in a ROM (Read Only Memory) 904. An execution program or control data used by the CPU 902 for performing processing is temporarily stored in a RAM (Random Access Memory) 906.

The CPU 902, the ROM 904, and the RAM 906 are mutually connected via a bus 908. An input/output interface 910 is further connected to the bus 908. The input/output interface 910 is an interface to connect the CPU 902, the ROM 904, and the RAM 906 to an input section 912, an output section 914, a storage section 916, a communication section 918, and a drive 920.

The input section 912 accepts instructions from a user or information input via an input device such as a button, switch, lever, mouse, or keyboard. The display device 914 has, as described above, a screen of, for example, a CRT, PDP, liquid crystal display, or OLED and displays a content image or user interface image for the user.

The storage device 916 is constituted, for example, by an HDD or semiconductor memory and stores programs, program data, content data and the like. The communication device 918 performs communication processing by wire or by wireless via a network. The drive 920 is provided in a general-purpose computer when it is necessary and, for example, a removable media 922 is inserted into the drive 920.

It should be understood by those skilled in the art that various modifications, combinations, sub-combinations and alterations may occur depending on design requirements and other factors insofar as they are within the scope of the appended claims or the equivalents thereof.

In the present embodiment, for example, an example in which a wireless line is used as a communication line is described. However, instead of a wireless line, a wire line may be used as another embodiment. By replacing, for example, the physical layer Tx 148, the antenna section 152, and the physical layer Rx 154 by suitable functions, like the network 10 described above, any network using a LAN, WAN, ADSL, power line, LVDS connection line, HDMI, wireless LAN (IEEE802.11), Bluetooth, WiMax, or ultra-wide band radio can be used.

Further, in the present embodiment, the use of the TCP or UDP/RTP protocol is assumed. However, the present invention is not limited to such an example and is applicable to any protocol that can distinguish between image data and control data.

For example, transmission processing and reception processing according to an embodiment described by using flow charts need not necessarily be performed in the order described in the flow charts. Processing steps may contain steps performed in parallel or individually independently.

The present application contains subject matter related to that disclosed in Japanese Priority Patent Application JP 2008-315615 filed in the Japan Patent Office on Dec 11, 2008, the entire content of which is hereby incorporated by reference.

## Claims

1. A transmitting apparatus, comprising:
an image superimposition section that generates a superimposed image data by superimposing a user interface image generated based on a first control data used to control a user interface onto a content image;
an image compression section that encodes the superimposed image data generated by the image superimposition section per an encoding unit corresponding to N lines in one field (N is equal to or greater than 1); and
a communication section that transmits the superimposed image data encoded by the image compression section:

2. The transmitting apparatus according to claim 1, further comprising:
a multiplexing section that multiplexes a second control data used to control communication with the superimposed image data encoded by the image compression section, wherein
the communication section transmits the superimposed image data multiplexed with the second control data by the multiplexing section.

3. The transmitting apparatus according to claim 2, wherein the communication section further receives an operation signal transmitted from an external apparatus in connection with the user interface image displayed by another apparatus that had received the superimposed image data.

4. A receiving apparatus, comprising:
a communication section that receives a superimposed image data generated by superimposing a user interface image generated based on a first control data used to control a user .interface onto a content image and encoded per an encoding unit corresponding to N lines in one field (N is equal to or greater than 1); and
an image decoding section that decodes the superimposed image data received by the communication section per the encoding unit.

5. The receiving apparatus according to claim 4, further comprising a separation section that separates a second control data used to control communication from the superimposed image data before the superimposed image data being decoded by the image decoding section.

6. The receiving apparatus according to claim 4, wherein the communication section compares a rate of errors contained in the received superimposed image data with a certain threshold and, if the rate of errors is not greater than the threshold, causes the image decoding section to decode the superimposed image data.

7. The receiving apparatus according to claim 6, wherein if the rate of errors contained in the received superimposed image data is greater than the certain threshold, the communication section transmits a response signal for error notification to a transmission source apparatus of the superimposed image data.

8. The receiving apparatus according to claim 4,
wherein the superimposed image data is hierarchically encoded image data containing two or more types of image data including low-frequency image data having low image quality and high-frequency image data having high image quality and
if low-frequency image data of a certain frequency is received by the communication section as the superimposed image data, the image decoding section decodes the received superimposed image data regardless of whether image data of a higher frequency is received.

9. A transmitting apparatus, comprising:
an image superimposition section that generates a superimposed image data by superimposing a user interface image generated based on a first control data used to control a user interface onto a content image;
an image compression section that encodes the superimposed image data generated by the image superimposition section;
a multiplexing section that multiplexes a second control data used to control communication with the superimposed image data encoded by the image compression section; and
a communication section that transmits the superimposed image data multiplexed with the second control data by the multiplexing section.

10. A receiving apparatus, comprising:
a communication section that receives a superimposed image data generated by superimposing a user interface image generated based on a first control data used to control a user interface onto a content image and multiplexed with a second control data used to control communication;
a separation section that separates the second control data from the superimposed image data received by the communication section; and
an image decoding section that decodes the superimposed image data from which the second control data is separated by the separation section.

11. A communication system, comprising:
a transmitting apparatus, including:
an image superimposition section that generates a superimposed image data by superimposing a user interface image generated based on a first control data used to control a user interface onto a content image;
an image compression section that encodes the superimposed image data generated by the image superimposition section per an encoding unit corresponding to N lines in one field (N is equal to or greater than 1); and
a transmitting-side communication section that transmits the superimposed image data encoded by the image compression section; and
a receiving apparatus, including:
a receiving-side communication section that receives the superimposed image data transmitted by the transmitting apparatus; and
an image decoding section that decodes the superimposed image data received by the receiving-side communication section per the encoding unit.

12. A communication method, comprising the steps of:
generating superimposed image data by superimposing a user interface image generated based on a first control data used to control a user interface onto a content image in a transmitting apparatus;
encoding the generated superimposed image data per an encoding unit corresponding to N lines in one field (N is equal to or greater than 1);
transmitting the encoded superimposed image data from the transmitting apparatus to a receiving apparatus;
receiving the superimposed image data transmitted by the transmitting apparatus in the receiving apparatus; and
decoding the received superimposed image data per the encoding unit.

13. A computer program product having instructions that cause a computer, which controls a transmitting apparatus, to function as:
an image superimposition section that generates a superimposed image data by superimposing a user interface image generated based on a first control data used to control a user interface onto a content image;
an image compression section that encodes the superimposed image data generated by the image superimposition section per an encoding unit corresponding to N lines in one field (N is equal to or greater than 1); and
a communication section that transmits the superimposed image data encoded by the image compression section.

14. A computer program product having instructions that cause a computer, which controls a receiving apparatus, to function as:
a communication section that receives a superimposed image data generated by superimposing a user interface image generated based on a first control data used to control a user interface onto a content image and encoded per an encoding unit corresponding to N lines in one field (N is equal to or greater than 1); and
an image decoding section that decodes the superimposed image data received by the communication section per the encoding unit.
